(19) Europäisches Patentamt
European Patent Office
Office européen des brevets

(11) Veröffentlichungsnummer : **0 476 485 B1**

(12) # EUROPÄISCHE PATENTSCHRIFT

(45) Veröffentlichungstag der Patentschrift : **04.05.94 Patentblatt 94/18**

(51) Int. Cl.[5] : **C10L 1/22**, C10M 133/54, C10M 133/58, C10M 157/04, C10M 133/52, C08F 8/32, C08F 8/30

(21) Anmeldenummer : **91115261.9**

(22) Anmeldetag : **10.09.91**

(54) **Polyisobutylaminoalkohole und Kraftstoffe enthaltend diese hochmolekularen Aminoalkohole.**

(30) Priorität : **24.09.90 DE 4030164**

(43) Veröffentlichungstag der Anmeldung : **25.03.92 Patentblatt 92/13**

(45) Bekanntmachung des Hinweises auf die Patenterteilung : **04.05.94 Patentblatt 94/18**

(84) Benannte Vertragsstaaten : **AT DE FR GB IT NL SE**

(56) Entgegenhaltungen :
**DE-A- 2 702 604**
**DE-A- 3 611 230**
**FR-A- 2 130 394**
**FR-A- 2 211 526**
**US-A- 3 931 024**

(73) Patentinhaber : **BASF Aktiengesellschaft**
**Carl-Bosch-Strasse 38**
**D-67063 Ludwigshafen (DE)**

(72) Erfinder : **Mohr, Juergen, Dr.**
**Hochgewanne 48**
**W-6718 Gruenstadt (DE)**
Erfinder : **Oppenlaender, Knut, Dr.**
**Otto-Dill-Strasse 23**
**W-6700 Ludwigshafen (DE)**
Erfinder : **Gousetis, Charalampos, Dr.**
**Carl-Bosch-Strasse 98**
**W-6700 Ludwigshafen (DE)**
Erfinder : **Kaestner, Ralf, Dr.**
**Londoner Ring 7**
**W-6700 Ludwigshafen (DE)**
Erfinder : **Rieber, Norbert, Dr.**
**Liebfrauenstrasse 1 c**
**W-6800 Mannheim 51 (DE)**
Erfinder : **Fischer, Martin, Dr.**
**Elbinger Weg 1**
**W-6700 Ludwigshafen (DE)**
Erfinder : **Thomas, Juergen, Dr.**
**Merowinger Strasse 5**
**W-6701 Fussgoenheim (DE)**

**EP 0 476 485 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft Polyisobutylaminoalkohole und Kraftstoffe für Verbrennungsmotoren enthaltend geringe Mengen an Polyisobutylaminoalkoholen.

Vergaser und Einlaßsystem von Ottomotoren, aber auch Einspritzsysteme für die Kraftstoffdosierung in Otto- und Dieselmotoren werden in zunehmenden Maße durch Verunreinigungen belastet, die durch Staubteilchen aus der Luft, unverbrannte Kohlenwasserstoffreste aus dem Brennraum und die in den Vergaser geleiteten Kurbelwellengehäuseentlüftungsgase verursacht werden.

Die Rückstände verschieben das Luft-Kraftstoffverhältnis im Leerlauf und im unteren Teillastbereich, so daß das Gemisch fetter, die Verbrennung unvollständiger und wiederum die Anteile unverbrannter oder teilverbrannter Kohlenwasserstoffe im Abgas größer werden und der Benzinverbrauch steigt.

Es ist bekannt, daß zur Vermeidung dieser Nachteile Kraftstoffadditive zur Reinhaltung von Ventilen und Vergaser bzw. Einspritzsystemen verwendet werden (vgl. z.B.: M. Rossenbeck in Katalysatoren, Tenside, Mineralöladditive, Hrsg. J. Falbe, U. Hasserodt, S. 223 f., G. Thieme Verlag, Stuttgart 1978).

Je nach Wirkungsweise aber auch nach dem bevorzugten Wirkort solcher Detergent-Additive unterscheidet man heute zwei Generationen.

Die erste Additiv-Generation konnte nur die Bildung von Ablagerungen im Ansaugsystem verhindern, nicht aber bereits vorhandene Ablagerungen wieder entfernen, wohingegen die Additive der zweiten Generation beides bewirken können ("keep-clean-" und "clean-up-Effekt") und zwar aufgrund ihrer hervorragenden Thermostabilität, insbesondere auch an Zonen höherer Temperaturen, nämlich an den Einlaßventilen.

Das molekulare Bauprinzip von Kraftstoff-Detergenzien kann verallgemeinernd angegeben werden als Verknüpfung polarer Strukturen mit meist höhermolekularen, unpolaren oder lipophilen Resten.

Vertreter der zweiten Additiv-Generation sind oft Produkte auf der Basis von Polyisobutenen im unpolaren Molekülteil. Hier wiederum sind Additive vom Polyisobutylamin-Typ besonders hervorzuheben. Polyisobutylamine erhält man, ausgehend von Polyisobutenen, im wesentlichen nach zwei Verfahren. Das erste verläuft über eine Chlorierung des polymeren Grundkörpers und anschließenden nukleophilen Ersatz durch Amino oder vorzugsweise Ammoniak. Der Nachteil dieses Verfahrens ist die Verwendung von Chlor und das Auftreten von Chlor- oder Chlorid-haltigen Produkten, die keinesfalls mehr erwünscht sind und soweit irgend möglich gemieden werden (DE-OS 21 29 461, DE-OS 22 45 918).

Im zweiten Verfahren wird ein reaktives Polyisobuten zunächst in einer Oxosynthese carbonyliert und danach in Anwesenheit von Ammoniak aminierend hydriert (DE-OS 36 11 230).

Obgleich diese Kraftstoffdetergentien auch eine gute Dispergierwirkung der bereits eingetretenen Ablagerungen haben, bestand die Aufgabe, Zusätze vorzuschlagen, die sich durch besonders hohe Dispergierwirkung auszeichnen. Diese Aufgabe wurde gelöst mit Kraftstoffen für Verbrennungsmotoren enthaltend geringe Mengen an Verbindungen der Formeln Ia und Ib

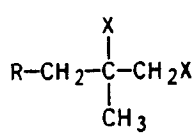

Ia

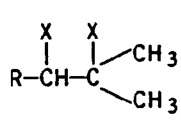

Ib

in der

R einen Polyisobutylrest mit einem Molekulargewicht (Zahlenmittel) von 500 bis 5000 und in beiden Formeln jeweils einer der Reste X eine OH-Gruppe und der andere Rest X die Gruppe

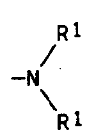

bedeutet, wobei die Reste $R^1$ gleich oder verschieden sein können und Wasserstoff, Alkyl, Hydroxyalkyl, Aminoalkyl, die noch durch weitere Hydroxy- oder Aminogruppen tragende Alkyl-Reste substituiert sein können, bedeuten oder in denen die beiden Reste $R^1$ einen nicht-aromatischen Ring bilden können.

Von diesen Verbindungen sind solche bevorzugt, bei denen ein $R^1$ Wasserstoff und das andere ein Polyaminrest insbesondere eine Ethylenaminoethylenaminrest bedeutet.

Die erfindungsgemäßen Polyisobutylaminoalkohole werden den Kraftstoffen in Mengen von 50 bis 5000, vorzugsweise 100 bis 2000 ppm zugesetzt.

Die neuen Additive verwendet man vorzugsweise zusammen mit an sich bekannten Polyisobutylaminen der Formel

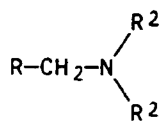

,

in der R die oben angegebenen Bedeutung hat und $R^2$ Wasserstoff, Alkyl oder Aminoalkyl, das noch durch weitere Aminogruppen tragende Alkylreste substituiert sein kann, bedeutet, um sowohl einen sehr guten Detergens- als auch Dispergiereffekt zu erzielen.

Die erfindungsgemäßen Polyisobutylaminoalkohole werden zweckmäßig durch Epoxidierung der entsprechenden Polyisobutene, und anschließend nukleophile Epoxidöffnung mit Ammoniak oder Aminen erhalten.

Zu diesem Zweck wird zunächst ein reaktives Polyisobuten mittels bekannter Epoxidierungsreagenzien und gegebenenfalls Katalysatoren (Peressigsäure, m-Chlorperbenzoesäure, Hydroperoxiden und ähnlichen Reagenzien) in das entsprechende Epoxid überführt (vgl. z.B.: G. Dittius in Houben-Weyl, Bd. 6/3, 4. Aufl., S. 385 f., G. Thieme Verl. Stuttgart 1965, oder D. Swern, Org. React. Vol. VII, 378 f (1953)).

Die verwendeten Polyisobutene haben ein mittleres Molekulargewicht zwischen 500 und 5000, vorzugsweise zwischen 800 und 1500. Sie werden nach bekanntem Verfahren durch kationische Polymerisation von Isobuten erhalten, wobei nach Abbruch der Polymerkette im zuletzt eingebauten Monomeren eine Doppelbindung verbleibt (vgl. z.B.: DE-OS 27 02 604 und EP-A 0 145 235).

Diese Doppelbindung wird nach an sich bekannten Methoden epoxidiert. Die Epoxidierung eines Polyisobutens z.B. mittels m-Chlorperbenzoesäure ist von J.P. Kennedy u.a., J. Polym. Sci.: Polym. Chem. Ed., Vol. 20, 2809 bis 2817 (1982), beschrieben.

Sehr hohe Ausbeuten an Epoxid erhält man auch, indem man das Olefin mit Hydroperoxiden, z.B. t-Butylhydroperoxid, in Anwesenheit von Übergangsmetallkatalysatoren, (Molybdän-, Wolframsalze oder -komplexe) in unter den Reaktionsbedingungen inerten Lösungsmitteln oder in Substanz umsetzt.

Die nach den oben erwähnten Verfahren erhaltenen Epoxide können mit Ammoniak, Aminen, Polyaminen wie Diethylentriamin, Triethylentetramin, Polyiminen, Alkanolaminen wie Ethanolamin, Diethanolamin und Aminoethylethanolamin oder zyklischen Aminderivaten zur Reaktion gebracht werden, indem man die Reaktanden entweder in Substanz mischt oder in einem unter den Reaktionsbedingungen inerten Lösungsmittel z.B. in aliphatischen oder aromatischen Kohlenwasserstoffen oder Ethern löst und bei erhöhter Temperatur, entweder am Rückfluß des jeweiligen Lösungsmittels oder aber in einem Druckgefäß miteinander umsetzt.

Für die möglichst schnelle und vollständige Umsetzung ist häufig die Anwesenheit meist stöchiometrischer Mengen Wasser, das als Katalysator dient, erforderlich (vgl. z.B.: S.P. McManus u.a., Synth. Commun. 1973, 177).

Schnelle und vollständige Umsetzungen erzielt man auch durch die zusätzliche Verwendung saurer oder lewissaurer Katalysatoren (p-Toluolsulfonsäure, Carbonsäuren, Bortrifluorid-Etherat, Titanate oder Stannate).

Man erhält so, ausgehend von den entsprechenden Epoxiden, Aminoalkoholderivate, die in ihren physikalischen Eigenschaften ähnlich den Ausgangsverbindungen sind. Neben der Wirksamkeit als Detergentien und Dispergatoren im Einlaßsystem verfügen die erfindungsgemäß zuzusetzenden Umsetzungsprodukte mit höheren Aminen auch dispergierende Eigenschaften im Motorenöl, während sich die bereits bekannten Polyisobutylamine allenfalls ölschlamm-neutral verhalten.

Die Prüfung der Produkte als Kraftstoffadditive, besonders auf ihre Eignung als Ventil- und Vergaserreiniger, geschieht mit Hilfe von Motortests, die in Prüfstandsversuchen mit einem 1,2 l Opel-Kadett-Motor gemäß CEC-F-02-T-79 durchgeführt werden.

Zur Beurteilung der Dispergierwirkung von Additiven kann ein Tüpfeltest herangezogen werden, wie er zum Beispiel von A. Schilling in "Les Huiles pour Moteurs et le Graissage des Moteurs", Vol. 1, 1962, Seite 89 f. in etwas modifizierter Form beschrieben ist.

Beispiel 1

Herstellung der Polyisobuten-Epoxide

a) Epoxidierung mit Peressigsäure

900 g eines reaktiven Polyisobutens mit dem Molgewicht $M_n$ = 950 (hergestellt nach DE-OS 27 02 604) werden in 2000 ml Toluol gelöst. Zu dieser Lösung tropft man 83 g Peressigsäure in Form einer 10 %igen Lösung in Eisessig, während einer Stunde bei 40°C zu. Danach wird noch ca. eine Stunde bei dieser Temperatur nachgerührt.

Nach Abkühlen wird die Toluolphase abgetrennt, 2 mal mit je 300 ml Wasser gewaschen und getrocknet. Ein Peroxidgehalt der Lösung ist durch Titration dann nicht mehr nachweisbar.

Der Epoxidierungsgrad beträgt ca. 70 % laut Epoxid-Titration (Analyt. Chem. 36, 667 (1964)).

b) Epoxidierung mit tert.-Butylhydroperoxid

Eine Lösung von 100 g eines reaktiven Polyisobutens mit dem Molgewicht $M_n$ = 950 (hergestellt nach DE-OS 27 02 604), 81 g t-Butylhydroperoxid/t-Butanol (1:1) und 0,7 g Molybdänethylhexanoat in Cyclohexanol (Mo-Gehalt 6,6 %) wird eine Stunde auf 80°C danach noch 2 Stunden auf 90°C erhitzt. Man trennt nach Abkühlen die beiden Phasen voneinander und wäscht die Polyisobuten-Phase ggf. mit Wasser und verdünnter Natriumhydrogencarbonat-Lösung.

Flüchtige Bestandteile und Leichtsieder werden anschließend bei 80°C im Wasserstrahlvakuum entfernt.

Es verbleiben 102.6 g eines öligen Rückstands, der nach volumetrischer Titration (Analyt. Chem. 36, 667 (1964)) über 95 % Epoxid enthält. Die Bildung des Epoxids kann $^1H$- und $^{13}C$-NMR-spektroskopisch verfolgt werden.

Beispiel 2

Umsetzung des Epoxids mit Aminen am Beispiel Diethylentriamin

0,5 mol Diethylentriamin werden in 300 ml Xylol bei Rückflußtemperatur vorgelegt. Dazu wird eine Lösung von 0,1 mol des Epoxids gemäß Beispiel 1, a). in 300 ml Xylol langsam zugetropft. Man rührt die Mischung ca. 10 h am Rückfluß; danach ist der Epoxidwert der Mischung auf Null zurückgegangen. Nach Abkühlen wird die Lösung mit 300 ml Wasser gewaschen und getrocknet.

Man destilliert Lösungsmittel und überschüssiges Amin zunächst bei Normaldruck, später unter vermindertem Druck ab und isoliert das Produkt als gelbes, sehr viskoses Öl.

Beispiel 3

Ergebnisse von Motortests, Prüfung als Ventilreiniger

| | Ablagerung [mg]* Ventil-Nr. | | | |
|---|---|---|---|---|
| | 1 | 2 | 3 | 4 |
| Polyisobutylamin nach DE-OS 36 11 230 | 15 | 0 | 0 | 10 |
| Umsetzungsprodukt aus Beispiel 2 | 22 | 0 | 3 | 8 |

* nach CEC-F-02-T-79

Zur Beurteilung der Dispergierwirkung wird ein Tüpfeltest als Vorabtest herangezogen, wie er zum Beispiel von A. Schilling in "Les Huiles pour Moteurs et le Graissage des Moteurs", Vol. 1, 1962, Seite 89 f. in etwas

modifizierter Form beschrieben ist.

Dazu stellt man eine 2,5 %ige Lösung des gemäß Beispiel 2 erhaltenen Amin/Epoxid-Addukts in einem unlegierten Grundöl her, in der man anschließend Ruß (z.B.: MT-Ruß Thermax, Lehmann & Voss & Co., Hamburg) bei ca. 50°C unter Rühren eine Stunde lang dispergiert. Diese Dispersion wird auf einem Fließpapier (Filterpapier) wie ein Chromatogramm ca. 20 Stunden lang entwickelt.

Man vergleicht die Flächen von reinem Laufmittel (Öl) und verteiltem Ruß:

| | | |
|---|---|---|
| Grundwert | : | 1 bis 2 % der Gesamtfläche |
| Polyisobutylamin z. Vergleich | : | 11 % der Gesamtfläche |
| Umsetzungsprodukt gemäß Beispiel 2 | : | 32 % der Gesamtfläche |

Daraus ergibt sich, daß das erfindungsgemäß zu verwendende Umsetzungsprodukt bei vergleichbarer Detergenswirkung gemäß obigem tabellarischem Vergleich eine wesentlich bessere Dispergierwirkung als das entsprechende Polyisobutylamin aufweist.

## Patentansprüche

1. Kraftstoffe für Verbrennungsmotoren, enthaltend geringe Mengen an Verbindungen der Formeln Ia und Ib

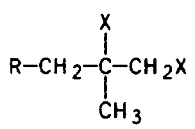

Ia

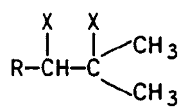

Ib

in der

R einen Polyisobutylrest mit einem Molekulargewicht (Zahlenmittel) von 500 bis 5000 und in beiden Formeln jeweils einer der Reste X eine OH-Gruppe und der andere Rest X die Gruppe

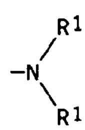

bedeutet, wobei die Reste $R^1$ gleich oder verschieden sein können und Wasserstoff, Alkyl, Hydroxyalkyl, Aminoalkyl, die noch durch weitere Hydroxy- oder Aminogruppen tragende Alkyl-Reste substituiert sein können, bedeuten, oder in denen die beiden Reste $R^1$ einen nicht-aromatischen Ring bilden können.

2. Kraftstoffe gemäß Anspruch 1, dadurch gekennzeichnet, daß ein $R^1$ Wasserstoff und das andere Ethylenaminoethylenamin bedeutet.

3. Kraftstoffe gemäß Anspruch 1, dadurch gekennzeichnet, daß sie 50 bis 5000 ppm der Verbindungen der Formel I enthalten.

4. Kraftstoffe gemäß Anspruch 1, dadurch gekennzeichnet, daß sie neben den Verbindungen der Formel I Kraftstoff-Detergentien der Formel

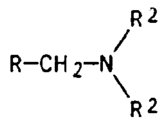

enthalten, in der R die oben angegebenen Bedeutung hat und $R^2$ Wasserstoff oder Alkyl oder Aminoalkyl, das noch durch weitere Aminogruppen tragende Alkylreste substituiert sein kann, bedeutet.

**5.** Polyisobutylaminoalkohole der allgemeinen Formeln Ia und Ib

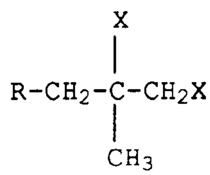

Ia

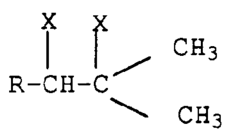

Ib

in denen

R einen Polyisobutylrest mit einem Molekulargewicht (Zahlenmittel) von 500 bis 5000 und in beiden Formeln jeweils einer der Reste X eine OH-Gruppe und der andere Rest X die Gruppe

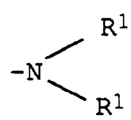

bedeutet, in der ein $R^1$ für Wasserstoff und das andere für Ethylenaminoethylenamin steht.

## Claims

**1.** A fuel for internal combustion engines, containing small amounts of compounds of the formulae Ia and Ib

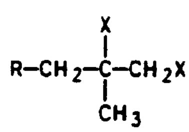

**Ia**

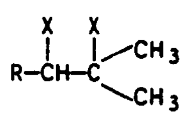

**Ib**

where R is polyisobutyl having a number average molecular weight of 500 to 5,000 and in each of the two formulae one of the radicals X is OH and the other is the group

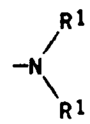

where the radicals $R^1$ may be identical or different and are each hydrogen, alkyl, hydroxyalkyl or aminoalkyl which may be substituted by further hydroxyl- or amino-carrying alkyl radicals, or the two radicals $R^1$ may form a nonaromatic ring.

2. A motor fuel as claimed in claim 1, wherein one radical $R^1$ is hydrogen and the other is an ethyleneaminoethyleneamine radical.

3. A motor fuel as claimed in claim 1, which contains from 50 to 5,000 ppm of the compounds of the formula I.

4. A motor fuel as claimed in claim 1, which contains, in addition to the compounds of the formula I, a detergent of the formula

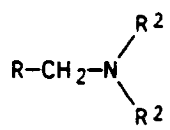

where R has the abovementioned meaning and $R^2$ is hydrogen or alkyl or aminoalkyl which may be substituted by further amino-carrying alkyl radicals.

5. A polyisobutylaminoalcohol of the general formula Ia or Ib

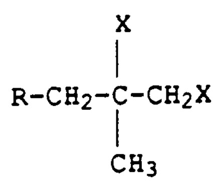

Ia

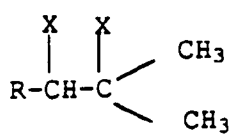

Ib

where R is polyisobutyl having a number average molcular weight of 500 to 5,000 and in each of the two formulae one of the radicals X is OH and the other is a group

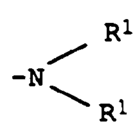

where one radical $R^1$ is hydrogen and the other is an ethyleneaminoethyleneamine radical.

## Revendications

1. Carburants pour moteurs à combustion interne, contenant de petites quantités de composés de formules Ia et Ib

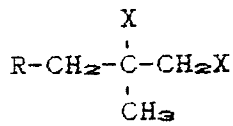

Ia

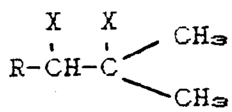

Ib

dans lesquelles

R représente un reste polyisobutyle ayant un poids moléculaire (moyenne en nombre) de 500 à 5000 et, dans chacune des deux formules, l'un des restes X represente un groupement OH et l'autre reste X représente le groupement

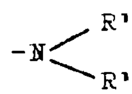

où les restes $R^1$ peuvent être identiques ou différents et représentent des atomes d'hydrogène ou des restes alkyle, hydroxyalkyle ou aminoalkyle qui peuvent être encore substitués par des restes alkyle portant d'autres groupements hydroxy ou amino, ou bien les deux restes $R^1$ peuvent former un noyau non aromatique.

2. Carburants selon la revendication 1, caractérisés en ce que l'un des restes $R^1$ représente un atome d'hydrogène et l'autre représente un groupement éthylène-aminoéthylène-amine.

3. Carburants selon la revendication 1, caractérisés en ce qu'ils contiennent de 50 à 5000 ppm des composés de formule I.

4. Carburants selon la revendication 1, caractérisés en ce qu'ils contiennent, en dehors des composés de formule I, des détergents pour carburants de formule

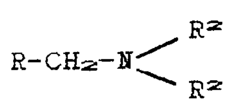

dans laquelle R a la signification donnée ci-dessus et $R^2$ représente un atome d'hydrogène ou un reste alkyle ou aminoalkyle qui peut être encore substitué par d'autres restes alkyle portant des groupements amino.

5. Polyisobutylaminoalcools de formules générales Ia et Ib

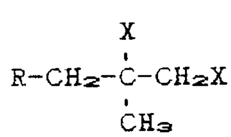

Ia

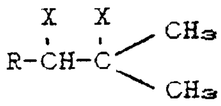

Ib

dans lesquelles

R représente un reste polyisobutyle ayant un poids moléculaire (moyenne en nombre) de 500 à 5000 et, dans chacune des deux formules, l'un des restes X représente un groupement OH et l'autre reste X représente le groupement

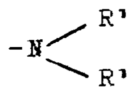

dans lequel l'un des restes $R^1$ est mis pour un atome d'hydrogène et l'autre pour un groupement éthylène-aminoéthylène-amine.